# EUROPEAN PATENT APPLICATION

(11) **EP 1 021 004 A1**
(43) Date of publication of application: **19.07.2000**
(21) Application number: 00400105.3
(22) Date of filing: 17.01.2000
(51) Int. Cl.: H04B 10/18

(54) **Method and apparatus for the stabilization of optical solitons**

(30) Priority: 18.01.1999 FR 9900436
(71) Applicant: ALCATEL, 75008 Paris (FR)
(72) Inventor: Hamaide, Jean-Pierre, 91180 St. Germain les Arpajon (FR); Neddam, Frédéric, 93100 Montreuil (FR)
(74) Representative: Croonenbroek, Thomas Jakob

(57) **Abrégé**

L'invention concerne un procédé de stabilisation de solitons optiques gérés se propageant dans une ligne de transmission à fibre optique à gestion de dispersion, caractérisé en ce que l'on réalise périodiquement le long de la ligne de transmission pour chaque soliton optique géré
- une première étape consistant à établir un couplage sensiblement linéaire entre l'énergie et la largeur spectrale du soliton optique, et
- une deuxième étape consistant à fixer par filtrage la largeur spectrale et, grâce audit couplage sensiblement linéaire, l'énergie du soliton résultant de la première étape, la fréquence centrale de filtrage étant sensiblement égale à la fréquence centrale du soliton optique.

## Description

L'invention concerne le domaine des télécommunications sur fibre optique, et plus particulièrement des télécommunications sur des longues distances par fibre optique à signaux solitons et à multiplexage en longueur d'onde.

La transmission d'impulsions solitons ou de solitons dans la partie d'une fibre optique à dispersion anormale est un phénomène connu. Les solitons sont des signaux impulsionnels de forme sech². Avec cette forme d'impulsion, la non-linéarité dans la partie correspondante de la fibre compense la dispersion du signal optique, c'est-à-dire que la dépendance de l'indice de réfraction sur l'intensité du signal optique est contrebalancée par la dispersion chromatique et vice-versa. La transmission des solitons est modélisée de façon connue par l'équation de Schrödinger non-linéaire.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol, 11 n DEG 10 pages 665-667. Cet effet, appelé effet Gordon-Haus, impose une limite théorique à la qualité ou au débit des transmissions par solitons.

Pour arriver à dépasser cette limite, il est possible d'utiliser une modulation synchrone des solitons, à l'aide de modulateurs semi-conducteurs. Cette technique limite intrinsèquement le débit de la liaison solitons du fait de leur complexité et de la limite supérieure de la bande passante des modulateurs semi-conducteurs.

Une autre solution pour dépasser la limite de transmission évoquée ci-dessus consiste à introduire des solitons dans une ligne de transmission à fibre optique gérée en dispersion. Cette technique est par exemple décrite dans l'article de N.J. Smith et al. "Soliton transmission using periodic dispersion compensation" apparu dans le "Journal of Lightwave technology", Vol. 15, N°10, Octobre 1997. Dans une telle ligne gérée en dispersion, on alterne des segments de fibre optique ayant respectivement une dispersion normale et une dispersion anormale. La ligne de transmission présente donc une dispersion moyenne faible pour laquelle il existe une impulsion du type soliton dont les caractéristiques (durée, fonction de trille ....) varient périodiquement. Ces sautons se propageant dans une ligne de transmission gérée en dispersion s'appellent aussi des "solitons gérés". Par rapport au soliton classique se propageant dans une ligne non gérée en dispersion, le soliton géré présente l'avantage qu'il peut avoir une énergie plus élevée, ce qui permet d'augmenter considérablement la distance totale de propagation. En outre, la technique de gestion de la dispersion permet avantageusement de réduire des effets non linéaires, notamment dans des lignes de transmission à multiplexage en longueur d'onde, comme par exemple la modulation de phase croisée (XPM pour "cross phase modulation" en anglais) ou le mélange à quatre ondes FWM (pour 〈〈 Four-Wave-Mixing 〉〉 en anglais).

Pour dépasser les limites théoriques dans des lignes de transmission non gérée en dispersion, il a aussi été proposé des systèmes de filtres guidants glissants, permettant de contrôler la gigue des solitons transmis, voir par exemple EP-A-0 576 208. Dans cette configuration, la ligne de transmission est rendue opaque pour le bruit alors qu'elle est transparente pour le soliton.

On peut penser que la combinaison de la technique de gestion de la dispersion avec celle des filtres guidants glissants permettrait de repousser les limites de transmission davantage.

Mais la Demanderesse a trouvé par des simulations numériques que le contraire se produit. En effet l'utilisation des filtres guidants glissants dans une ligne de transmission gérée en dispersion conduit à des fluctuations d'amplitude et une gigue temporelle importantes qui sont inadmissibles pour un système de transmission par fibre optique fiable. Au lieu d'améliorer la transmission, celle-ci est considérablement dégradée.

Par ailleurs, pour augmenter le débit des systèmes de transmission à fibre optique à signaux solitons, il a aussi été proposé d'utiliser un multiplexage de longueurs d'onde (WDM pour "wavelength divison multiplexing" en anglais)

Le multiplexage de longueurs d'onde, appelé WDM par la suite, consiste à combiner sur une même fibre plusieurs canaux modulés ayant chacun une longueur d'onde porteuse différente. Ainsi, le débit global d'une ligne de transmission est égal à la somme des débits des différents canaux.

La présente invention propose un procédé et un équipement pour la mise en oeuvre du procédé qui permette de repousser davantage la limite de transmission de la technique de transmission par fibre optique à gestion de dispersion.

A cet effet, l'invention a pour objet un procédé de stabilisation de solitons optiques gérés se propageant dans une ligne de transmission à fibre optique à gestion de dispersion, caractérisé en ce que l'on réalise périodiquement le long de la ligne de transmission pour chaque soliton optique géré
- une première étape consistant à établir un couplage sensiblement linéaire entre l'énergie et la largeur spectrale du soliton optique, et
- une deuxième étape consistant à fixer par filtrage la largeur spectrale et, grâce au couplage sensiblement linéaire, l'énergie du soliton résultant de la première étape, la fréquence centrale de filtrage étant sensiblement égale à la fréquence centrale du soliton optique.

Le procédé selon l'invention peut en outre présenter une ou plusieurs des caractéristiques suivantes :
■ lors de la première étape, chaque soliton optique géré est converti en un soliton Schrödinger pur en l'amplifiant et en l'introduisant dans une fibre optique ayant une dispersion adaptée à l'amplitude du soliton amplifié pour ainsi établir le couplage sensiblement linéaire entre l'énergie et la largeur spectrale du soliton optique,
■ lors de la première étape, chaque soliton optique géré est amplifié et ensuite introduit dans une fibre fortement non linéaire par rapport à la ligne de transmission et peu dispersive, l'énergie des solitons amplifiés étant suffisante pour provoquer des effets Kerr optiques non linéaires lorsque les solitons amplifiés se propagent dans ladite fibre fortement non linéaire et peu dispersive pour ainsi établir un couplage sensiblement linéaire entre l'énergie et la largeur spectrale du soliton optique,
■ pour des solitons gérés avec une fonction de trille, après de la seconde étape, on réalise une troisième étape consistant à rétablir la fonction de trille du soliton optique telle qu'elle était avant la première étape,
■ dans le cas où la ligne de transmission optique est une ligne à fibre optique à multiplexage en longueurs d'onde et où chaque soliton optique géré se propage dans un canal associé d'une pluralité de canaux multiplexés, une étape de démultiplexage est réalisée avant ladite première étape et une étape de multiplexage est réalisée après la dernière étape du procédé et les étapes du procédé sont réalisées pour chaque canal individuellement.

L'invention a en outre pour objet un équipement pour la mise en oeuvre du procédé tel que défini ci-dessus, caractérisé en ce qu'il comprend
- des premiers moyens pour établir un couplage sensiblement linéaire entre l'énergie et la largeur spectrale du soliton optique, et
- des seconds moyens pour fixer par filtrage la largeur spectrale et, grâce au couplage sensiblement linéaire, l'énergie du soliton en sortie des premiers moyens, la fréquence centrale de filtrage étant sensiblement égale à la fréquence centrale du soliton optique.

L'équipement selon l'invention peut en outre présenter une ou plusieurs des caractéristiques suivantes
■ les premiers moyens pour établir un couplage sensiblement linéaire entre l'énergie et la largeur spectrale du soliton optique comprennent, disposés en ligne, un amplificateur et une fibre optique ayant une dispersion adaptée à l'amplitude du soliton optique pour convertir celui-ci en un soliton Schrödinger pur,
■ les premiers moyens pour établir un couplage sensiblement linéaire entre l'énergie et la largeur spectrale du soliton optique comprennent, disposés en ligne, un amplificateur et une fibre fortement non linéaire par rapport à la ligne de transmission et peu dispersive, l'énergie des solitons amplifiés étant suffisante pour provoquer des effets Kerr optiques non linéaires lorsque les solitons amplifiés se propagent dons ladite fibre fortement non linéaire et peu dispersive,
■ pour des solitons gérés avec une fonction de trille, l'équipement comprend, disposés en aval desdits seconds moyens, des troisième moyens pour rétablir la fonction de trille du soliton optique telle qu'elle était en amont desdits premiers moyens,
■ dans le cas où la ligne de transmission optique est une ligne à fibre optique à multiplexage en longueurs d'onde et où chaque soliton optique géré se propage dans un canal associé d'une pluralité de canaux multiplexés, l'équipement comprend des moyens de démultiplexage disposés en amont desdits premiers moyens et des moyens de multiplexage disposés en aval desdits seconds ou troisième moyens.

D'autres caractéristiques et avantages de l'invention ressortiront de la description suivante, donnée à titre d'exemple, sans caractère limitatif, en regard des dessins annexés sur lesquels:
- La figure 1 montre un schéma synoptique d'un système de transmission de données par fibre optique menant en oeuvre le procédé selon l'invention,
- La figure 2 est un schéma synoptique d'un premier mode de réalisation d'un équipement de stabilisation selon l'invention,
- La figure 3 est un graphique pour illustrer le fonctionnement d'une première variante du procédé selon l'invention,
- La figure 4 est une vue identique à celle de la figure 2 d'un second mode de réalisation d'un équipement de stabilisation selon l'invention.

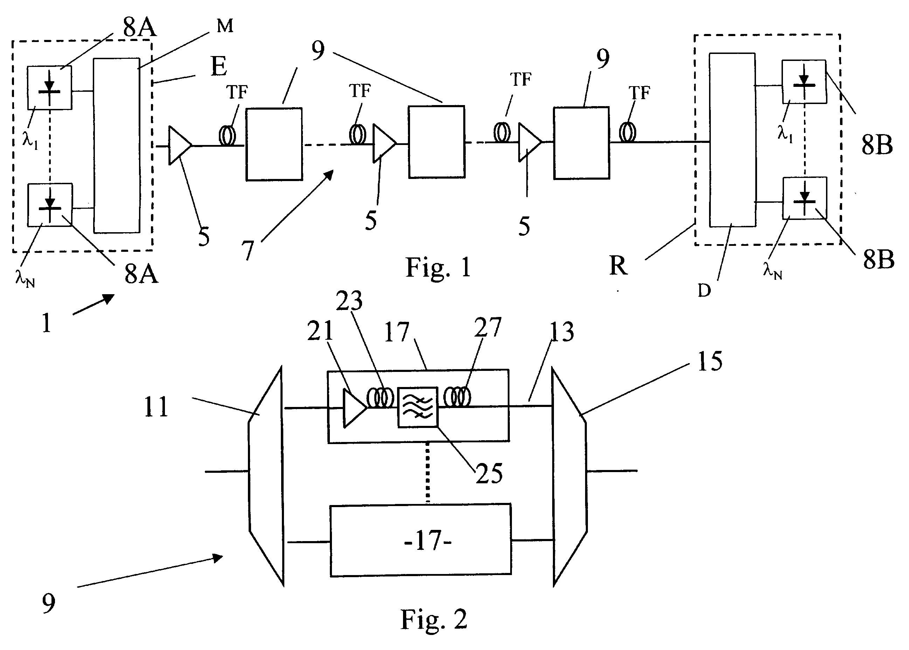

La figure 1 est un schéma synoptique d'un système 1 de transmission de données à fibre optique à multiplexage en longueur d'onde.

Ce système 1 comprend, disposés en ligne, un émetteur optique E de signaux optiques multiplexés en longueur d'onde, un premier amplificateur optique d'attaque 5, une ligne 7 de transmission à fibre optique des signaux optiques multiplexés et un récepteur optique R.

L'émetteur E comprend une pluralité de sources optiques 8A aptes à émettre des signoux optiques ayant des longueurs d'onde respectives λ₁, λ₂,... λ_{N} (N étant un nombre naturel quelconque) définissant ainsi chacun un canal de transmission avec une porteuse de longueur d'onde associée, et un multiplexeur M pour introduire les signaux optiques dans la ligne 7 de transmission.

De manière symétrique, le récepteur optique R comprend un démultiplexeur D et une pluralité de détecteurs 8B aptes à recevoir les signaux optiques de longueurs d'onde respectives λ₁, λ₂, λ_{N}.

La ligne 7 de transmission comprend des tronçons TF d'une fibre optique de transmission à gestion de dispersion. Chaque tronçon TF se compose par exemple de segments de fibre de deux sortes une fibre optique à dispersion normale par exemple de D₁ = 4.68 ps/nm.km et une fibre optique à dispersion anormale par exemple de D₂ = -4.52 ps/nm.km. Ces segments possédant par exemple une longueur de 50km sont disposés en alternance dans chaque tronçon. On obtient ainsi pour chaque tronçon TF une dispersion moyenne de 〈D〉 = 0.078 ps/nm.km. Pour le fonctionnement des tronçons de fibre TF gérés en dispersion, on se refera à l'article précité de N.J. Smith et al..

Entre chaque tronçon TF est disposé un équipement 9 de stabilisation des solitons optiques gérés.

Bien entendu, on peut également prévoir de disposer dans la ligne 7 de transmission un tel équipement qu'une seule fois ou à quelques emplacements choisis. De préférence, en particulier si on prévoit qu'une seule stabilisation des solitons selon l'invention, on prévoit de disposer un équipement de stabilisation en fin de ligne de transmission.

On se réfère maintenant à la figure 2 qui présente un schéma synoptique plus détaillé d'un premier mode de réalisation de l'équipement 9.

L'équipement 9 de stabilisation des solitons optiques gérés en dispersion comprend un démultiplexeur 11 à une entrée et N sorties, un ensemble de N lignes de fibre optique 13 en parallèle correspondant aux N canaux de transmission, et un multiplexeur 15 à N entrées et une sortie.

Dons chacune des lignes de fibre optique 13 est disposée une unité 17 de stabilisation comprenant en ligne un premier amplificateur optique 21 par exemple du type à fibre dopée Erbium EDFA (pour 〈〈 Erbium Doped Fiber Amplifier en anglais) et une première portion de fibre 23 ayant une dispersion adaptée à l'amplitude du soliton amplifié en sortie de l'amplificateur 21 de sorte que les solitons se propageant dans cette portion sont transformés en des sautons Schrödinger purs. On a ainsi établit un couplage sensiblement linéaire entre l'énergie et la largeur spectrale du soliton optique.

De préférence, la première portion de fibre 23 possède une longueur supérieure à la période soliton qui est la distance sur laquelle la phase du soliton varie de π/2.

En aval de la portion de fibre 23 sont disposés un filtre guidant 25 et, de façon optionnelle, une seconde portion de fibre 27 permettant de rétablir la fonction de trille du signal soliton telle qu'elle était en amont de l'unité 17. En anglais, la fonction de trille est appelée "chirp".

La fréquence centrale du filtre guidant 25 est sensiblement égale à la fréquence centrale des solitons se propageant dans le canal en question.

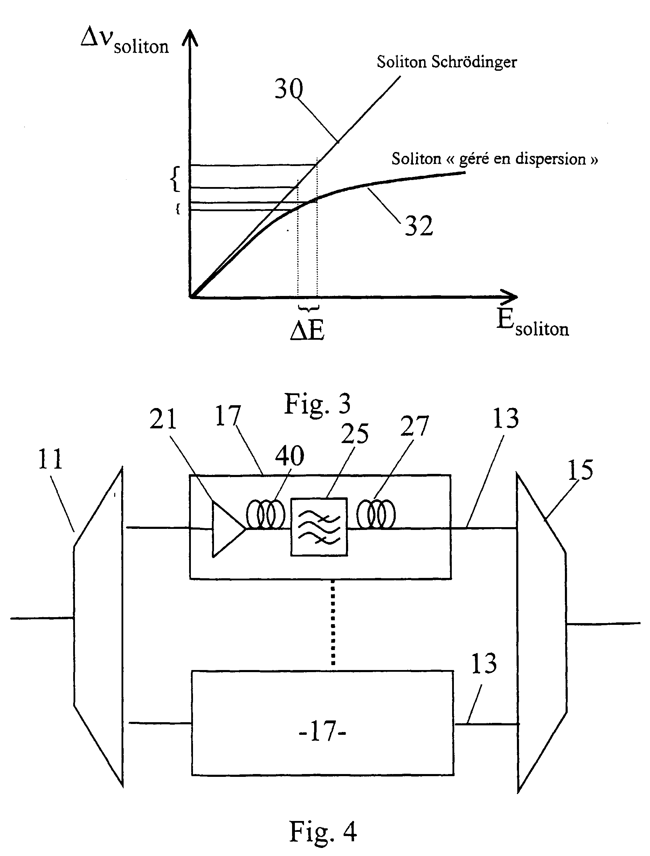

En référence à la figure 3, on explique maintenant comment le procédé selon l'invention permet de stabiliser les solitons optiques gérés.

Le graphique de la figure 3 montre de façon schématique la relation entre l'énergie des solitons et leur largeur spectrale. Pour des solitons se propageant en régime soliton de Schrödinger ou soliton pur, la relation entre l'énergie des solitons et leur largeur spectrale est une relation linéaire, représentée par une droite 30.

En revanche pour des solitons gérés ou solitons moyens, cette relation est une courbe 32 qui s'éloigne de la droite au fur et à mesure que l'énergie augmente. A cause de cette forme courbe, le filtrage d'un soliton géré par un filtre guidant ne permet pas une stabilisation efficace du soliton en fréquence et en énergie. En effet, pour des énergies élevées de soliton, un ΔE pour une énergie totale du soliton donnée correspond à une largeur spectrale Δν du soliton de plus en plus faible, alors que pour des solitons se propageant en régime Schrödinger, quelle que soit l'énergie du soliton, le ΔE pour une énergie totale du soliton donnée correspond toujours à la même largeur spectrale Δν du soliton.

C'est pourquoi, selon un premier mode de réalisation de l'invention, les solitons optiques gérés en dispersion sont converties en des solitons Schrödinger purs par l'intermédiaire de leur amplification optique dans l'amplificateur 21 et leur introduction dans la fibre optique 23 qui possède une dispersion adoptée pour permettre la conversion des sautons amplifiés en solitons de Schrödinger. Ainsi, on établit un couplage sensiblement linéaire entre l'énergie et la largeur spectrale du soliton optique.

Puis, une fois que les solitons gérés ont été convertis en solitons purs (solitons de Schrödinger), on fixe par filtrage dans le filtre guidant 25 la largeur spectrale et, grâce au couplage sensiblement linéaire, l'énergie du soliton.

En effet, après filtrage, la longueur d'onde du soliton est ramenée vers le centre du filtre. Grâce à ses propriétés corpusculaires, le soliton sera préservé et son spectre retrouve sa forme théorique au cours de la propagation. De plus, l'amplitude du soliton est stabilisée du fait de la proportionnalité entre ΔE et Δν pour des solitons purs.

On se réfère maintenant à la figure 4 qui présente un schéma synoptique plus détaillé d'un second mode de réalisation de l'équipement 9. Les éléments identiques à ceux de la figure 2 portent les mêmes numéros de référence.

L'équipement 9 de la figure 4 diffère de celui de la figure 2 par le fait que la première portion de fibre 23 ayant une dispersion adaptée au régime des solitons amplifiés est remplacée par une première portion de fibre 40 présentant de fortes non-linéarités par rapport aux tronçons TF de fibre, c'est-à-dire un effet Kerr important et une dispersion faible, c'est-à-dire une dispersion quasi-nulle ou normale.

Selon ce mode de réalisation, les solitons gérés en dispersion sont amplifiés dans l'amplificateur 21, puis introduit dans la première portion 40 de fibre fortement non-linéaire. Par les effets non-linéaires et plus particulièrement par l'automodulation de phase, le spectre de tous les solitons est élargi dans la portion de fibre 40. Plus l'énergie d'un soliton introduit dans la portion 40 est élevée, plus son spectre est élargi. On établit ainsi un couplage sensiblement linéaire entre l'énergie et la largeur spectrale du soliton optique

Ensuite, lors du filtrage dans le filtre 25, les solitons sont stabilisés en énergie et en fréquence par un effet de saturation. En effet, la longueur de la portion de fibre 40 et la largeur du filtre 25 sont choisies de préférence de manière que même les solitons de faible énergie à l'entrée de la portion 40 soient élargis au-delà de la largeur du filtre 25. Mais comme les solitons d'énergie plus importante sont aussi plus élargis spectralement dans la portion 40 de fibre non linéaire que les solitons d'énergie plus faible, les premiers sont aussi plus affectés par le filtrage, en particulier dans les ailes que les seconds. En conséquence, la fréquence et l'énergie des solitons est stabilisée.

Comme on le constate, le procédé selon l'invention et l'équipement pour sa mise en oeuvre permettent de stabiliser efficacement et avec peu de composants, pour la plupart des composants passifs, la fréquence et l'énergie des solitons se propageant dans une ligne de transmission à multiplexage en longueur d'onde et à gestion de dispersion, ce qui permet d'obtenir un débit de transmission de données plus élevé que dans les lignes de transmission connues dans l'état de la technique.

## Revendications

1. Procédé de stabilisation de solitons optiques gérés se propageant dans une ligne de transmission (7) à fibre optique à gestion de dispersion, dans lequel on réalise une ou plusieurs fois le long de la ligne de transmission (7) pour chaque soliton optique géré
- une première étape consistant à établir un couplage sensiblement linéaire entre l'énergie et la largeur spectrale du soliton optique par amplification et introduction dans une fibre (40) à effets non linéaires du soliton optique géré, et
- une deuxième étape consistant à fixer par filtrage la largeur spectrale et, grâce au couplage sensiblement linéaire, l'énergie du soliton résultant de la première étape, la fréquence centrale de filtrage étant sensiblement égale à la fréquence centrale du soliton optique, caractérisé en ce que lors de la première étape, tous les solitons sont spectralement élargis dans ladite fibre (40) à effets non linéaires.

2. Procédé selon la revendication 1, caractérisé en ce que la longueur de ladite fibre (40) à effets non linéaire et la largeur de filtrage sont choisies de manière que même des solitons de faible énergie soient élargis au delà de la largeur de filtrage.

3. Procédé selon la revendication 1 ou 2, caractérisé en ce que ladite fibre (40) à effets non linéaires est fortement non linéaire par rapport à la ligne de transmission (7) et peu dispersive*:*

4. Procédé selon l'une quelconque des revendications 1 à 3, caractérisé en ce que ladite fibre (40) à effets non linéaires possède une dispersion quasi-nulle ou normale.

5. Procédé selon l'une quelconque des revendications 1 à 4 pour des solitons gérés avec une fonction de trille, caractérisé en ce qu'après de la seconde étape, on réalise une troisième étape consistant à rétablir la fonction de trille du soliton optique telle qu'elle était avant la première étape.

6. Procédé selon l'une quelconque des revendications 1 à 5 dans lequel la ligne (7) de transmission optique est une ligne à fibre optique à multiplexage en longueurs d'onde et dans lequel chaque soliton optique géré se propage dans un canal associé d'une pluralité de canaux multiplexés, caractérisé en ce qu'une étape de démultiplexage est réalisée avant ladite première étape et une étape de multiplexage est réalisée après la dernière étape du procédé et en ce que les étapes du procédé sont réalisées pour chaque canal individuellement.

7. Procédé selon l'une quelconque des revendications 1 à 6, caractérisé en ce que l'on réalise les étapes du procédé périodiquement le long de la ligne de transmission (7).

8. Equipement de stabilisation de solitons optiques gérés se propageant dans une ligne (7) de transmission à fibre optique à gestion de dispersion, comprenant
- un amplificateur (21) et une fibre (40) à effets non linéaires disposés en ligne pour établir un couplage sensiblement linéaire entre l'énergie et la largeur spectrale du soliton optique par amplification et introduction dans la fibre (40) à effets non linéaires du soliton optique géré, et
- des moyens (25) pour fixer par filtrage la largeur spectrale et grâce au couplage sensiblement linéaire, l'énergie du soliton en sortie des premiers moyens, la fréquence centrale de filtrage étant sensiblement égale à la fréquence centrale du soliton optique, caractérisé en ce que la fibre (40) à effets non linéaires est choisi de manière à élargir spectralement tous les solitons.

9. Equipement selon la revendication 8, caractérisé en ce que la longueur de la fibre (40) et la largeur de filtrage des moyens de filtrage (25) sont choisies de manière que même des solitons de faible énergie soient élargis au-delà de la largeur des moyens de filtrage (25).

10. Equipement selon la revendication 8 ou 9, caractérisé en ce que la fibre (40) est fortement non linéaire par rapport à la ligne (7) de transmission et peu dispersive.

11. Equipement selon l'une quelconque des revendications 8 à 10, caractérisé en ce que ladite fibre (40) à effets non linéaires possède une dispersion quasi-nulle ou normale.

12. Equipement selon l'une quelconque des revendications 8 à 11 pour des solitons gérés avec une fonction de trille, caractérisé en ce qu qu'il comprend, disposés en aval desdits moyens (25) de filtrage, des moyens (27) pour rétablir la fonction de trille du soliton optique telle qu'elle était en amont dudit amplificateur (21).

13. Equipement selon l'une quelconque des revendications 8 à 12 dans lequel la ligne de transmission (7) optique est une ligne à fibre optique à multiplexage en longueurs d'onde et dans lequel chaque soliton optique géré se propage dans un canal associé d'une pluralité de canaux multiplexés, caractérisé en ce qu'il comprend des moyens (11) de démultiplexage disposés en amont dudit amplificateur (21) et des moyens (15) de multiplexage disposés en aval des moyens de filtrage (25) ou des moyens (27) pour rétablir la fonction de trille.
